# EUROPEAN PATENT SPECIFICATION

(11) **EP 2 265 054 B1**
(45) Date of publication and mention of the grant of the patent: **27.09.2017**
(21) Application number: 09721642.8
(22) Date of filing: 18.03.2009
(51) Int. Cl.: H04W 28/08, H04L 12/801, H04L 12/803, H04W 36/12, H04W 92/24, H04W 28/18, H04W 36/22, H04W 88/18

(54) **OVERLOAD PROCESSING METHOD AND APPARATUS**
VORRICHTUNG UND VERFAHREN ZUR ÜBERLASTUNGSVERARBEITUNG
PROCÉDÉ ET APPAREIL DE TRAITEMENT DE SURCHARGE

(30) Priority: 21.03.2008 CN 200810066200
(43) Date of publication of application: 22.12.2010
(73) Proprietor: Huawei Technologies Co., Ltd., Longgang District Shenzhen, Guangdong 518129 (CN)
(72) Inventor: GUO, Xiaolong c/o Huawei Technologies Co., Ltd. Int.Prop.Dept., Shenzhen (CN)
(74) Representative: Isarpatent
(86) International application number: PCT/CN2009/070860
(87) International publication number: WO 2009/115041

(56) References cited:
- EP-A2- 1 282 321
- CN-A- 101 039 506
- CN-A- 101 114 927
- CN-A- 101 114 928
- HUAWEI ET AL: "A method to achieve load balancing", 3GPP DRAFT; 23401_CR0041R4_(REL-8)_S2-081960, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. TSG SA, no. Puerto Vallarta, Mexico; 20080302, 2 March 2008 (2008-03-02), XP050210506, [retrieved on 2008-03-02]
- 3GPP: "3GPP TS 23.401 V8.0.0 (2007-12) 3rd Generation Partnership Project; Technical Specification Group Services and System Aspects; General Packet Radio Service (GPRS) enhancements for Evolved Universal Terrestrial Radio Access Network (E-UTRAN) access (Release 8)", 3GPP,, [Online] vol. 23.401, no. V8.0.0, 1 December 2007 (2007-12-01), pages 1-167, XP002538856, Retrieved from the Internet: URL:http://www.3gpp.org/ftp/Specs/html-inf o/23401.htm> [retrieved on 2009-07-27]
- "3rd Generation Partnership Project;Technical Specification Group Radio Access Network; Evolved UTRA and UTRAN;Radio Access Architecture and Interfaces (Release 7)", 3GPP DRAFT; TR_R3018_V_011 CLEAN, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG3, 5 October 2007 (2007-10-05), XP050143283, [retrieved on 2007-10-05]
- HUAWEI: "Relocation of MME/UPE for ACTIVE UEs", 3GPP DRAFT; R3-061064, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG3, no. Tallinn; 20060823, 23 August 2006 (2006-08-23), XP050159994, [retrieved on 2006-08-23]
- HUAWEI ET AL: "Load balancing and overload handling", 3GPP DRAFT; S2-082208, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. SA WG2, no. Jeju; 20080401, 1 April 2008 (2008-04-01), XP050264569, [retrieved on 2008-04-01]

## Description

### FIELD OF THE TECHNOLOGY

The present invention relates to a technology for balancing network resources, and more particularly to method and apparatus for overload handling.

### BACKGROUND OF THE INVENTION

Currently, when User Equipment (UE) accesses the network or users use the network, due to the existence of a lot of UE users, it is very important to allocate network resources reasonably. The existing communication network can allocate network resources in a balanced way by load balancing, load rebalancing, or overload handling.

Taking a System Architectural Evolution (SAE) system as an example, the SAE system can realize the allocation of network resources in many ways such as load balancing, load rebalancing, and overload handling. Load balancing refers to the situation that when a UE initially accesses or just enters a pool which herein is an area in which the UE moves without changing a serving Mobility Management Entity (MME), for example, if many-to-many connections exist between Radio Access Network (RAN) nodes and MMEs in the MME pool, so that the RAN nodes cannot find information of MMEs accessed by the UE, and cannot find accessed Core Network (CN) nodes corresponding to an MME Code (MMEC) carried by the UE, the RAN nodes select a most suitable CN node such as an MME with the lightest load for the UE. Load rebalancing refers to the load balancing between CN nodes such as MMEs because of operation and maintenance such as Operate and Management (O&M), in which some UEs are offloaded from one CN node and transferred to other CN nodes. Overload handling refers to the situation that when a CN node such as an MME is loaded too heavily, and the load exceeds a certain threshold, the CN node needs to instruct a part of RAN nodes to prohibit new access to the CN node, so as to prevent the CN node from being overloaded and crashed.

If an MME is overloaded, and only overload handling is performed, it can only be ensured that the load on the MME is not further increased, but the load is not reduced obviously, and the MME remains overloaded for a long time. The load can be reduced slowly only by releasing connections of some UEs or moving them to other pools. Moreover, since the MME remains overloaded for a long time, eNodeBs prohibit the UE from accessing the MME for a long time. Further, since actually MMEs of a whole pool are overloaded, the UE in the pool cannot access the network for a long time, and thus the satisfaction degree of users decreases, and the network cannot provide new communication.

From the description of the prior art using the example of an SAE system, it is apparent that the existing overload handling can only prevent further increase of the load by prohibiting the access of new users, but cannot reduce the load on overloaded equipment rapidly and cannot balance network resources in time, thereby resulting in a large probability that users are denied by or unable to access the network, and thus affecting the users' experience.

EP 1282321 describes a system and method for load sharing within a core network, in such a way that the inventive merit of what is claimed can be readly understood.

### SUMMARY OF THE INVENTION

The present invention is directed to an overload handling method and apparatus. By using the solutions provided in the present invention, the load on overloaded equipment can be reduced rapidly, and network resources can be balanced in time.

The objectives of the present invention are achieved through the following technical solution, as defined by the subject-matter of the independent claims. Preferred embodiments are set out in the dependent claims. An overload handling method for overload handling on a System Architectural Evolution, SAE, system, comprising:
acquiring, by a mobility management entity, MME, in a first pool, load information of a MME in a second pool when said the MME in the first pool is overloaded, wherein the second pool has an overlapping area with the first pool, wherein the overlapping area is an area belonging to or connected to multiple pools;
confirming, by the MME in the first pool, that the second pool is not overloaded according to the load information, and
transferring, by the MME in the first pool, a user equipment, UE, in the overlapping area of the first pool to the MME in the second pool.

A Mobility Management Entity, MME, for overload handling on a System Architectural Evolution, SAE, system, wherein the MME is in a first pool, comprising:
an information acquisition module, configured to acquire load information of a MME in a second pool when said the MME in the first pool is overloaded, wherein the second pool has an overlapping area with the first Poo, wherein the overlapping area is an area belonging to or connected to multiple pools 1;; and
a user equipment, UE, transfer module, adapted to confirm that the second pool is not overloaded according to the load information and transfer the UE requiring access to the MME to the pool having the overlapping area with the pool of the MME according to the load information acquired by the information acquisition module.

### BRIEF DESCRIPTION OF THE DRAWINGS

FIG. 1 is a view illustrating connections between MMEs and eNodeBs in a SAE system in an embodiment of the present invention; and
FIG. 2 is a flow chart illustrating information exchange between pools in an SAE system in an embodiment of the present invention.

### DETAILED DESCRIPTION OF THE EMBODIMENTS

An overload handling method and apparatus provided in the embodiments of the present invention can balance system resources reasonably, and decrease the probability that users are denied by or unable to access the network. The present invention is described in further detail in the following through the specific examples.

When the load balancing mechanism in the network is fine, the load on each node in the network is relatively balanced. If one of the nodes is overloaded, other nodes may also be fully or partially overloaded. At this time, if simple offloading operation, that is, load rebalancing, is still performed in a pool of an overloaded MME, all MMEs are easily overloaded until the system crashes. Taking an SAE system as an example, if the network load balancing mechanism is fine, and if RAN nodes are notified of load information thereof in real time by the network so that the RAN nodes always select CN equipment with the lightest load, all or most of other MMEs may also be overloaded if an MME in a pool is overloaded.

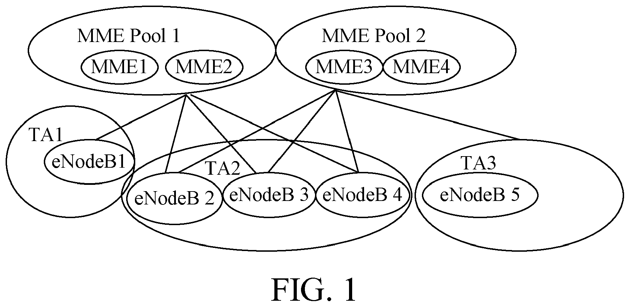

In an SAE network, due to the Flex design, that is, in a pool, multiple CN nodes such as MMEs are connected to all RAN nodes such as eNodeBs in the pool, taking MMEs and eNodeBs as an example, in the case that an MME in a pool is overloaded, if an overlapping area exists, the following overload handling may be performed. The overlapping area refers to an area having one or more eNodeBs connected to two or more pools. As shown in FIG. 1, taking an eNodeB 2 as an example, the eNodeB 2 is connected to a Pool 1 and a Pool 2 at the same time, and then a tracking area (TA) 2 is referred to as an overlapping area, that is, an area that belongs to or is connected to multiple pools.

The UE in an overlapping area that accesses an overloaded MME is transferred to another pool that has an overlapping area with a pool of the overloaded MME and allows access of the UE.

When an MME in an MME pool is overloaded, it means that other MMEs in the pool are also overloaded. Offloading, that is, load rebalancing, cannot be performed on the UE in the MME simply; otherwise, the UE may be transferred to the other overloaded MMEs in the Pool 1. However, MMEs in a pool having an overlapping area with the pool of the overloaded MME may not be overloaded. Therefore, users in the overlapping area may be transferred to an MME in the pool having the overlapping area with the pool of the overloaded MME, so that the load on the MME can be greatly reduced. When an MME in an MME pool is overloaded, if the MME acquires load information of another pool having an overlapping area with the pool thereof, and the another pool is not overloaded and allows access of the UE, the overloaded MME may transfer users in the present node that are in the overlapping area to the another pool having the overlapping area. For example, as shown in FIG. 1, the Pool 2 has an overlapping area with the Pool 1, and the Pool 2 is not overloaded, so that an MME 1 can transfer users in the present node that are in the overlapping area to the Pool 2, or users of the eNodeB 2 can be transferred to an MME 3 in the Pool 2. Thus the load on an MME 2 can be greatly reduced, and the load on the Pool 1 can be further reduced.

Persons skilled in the art can employ the following specific aspects to transfer the UE from an overloaded MME to a non-overloaded pool having an overlapping area with a pool of the overloaded MME. When an MME is overloaded, the MME sends a Load Query message to a pool having an overlapping area with the pool of the MME, and the pool having the overlapping area with the pool of the MME returns a Load Report to report its own load condition; if the pool having the overlapping area with the pool of the MME is not overloaded, the MME sends an Offload Start message to the pool having the overlapping area with the pool of the MME, and transfers a part of or all UEs accessing the overloaded MME to the non-overloaded pool having the overlapping area with the pool of the MME. Further, when an MME in a pool is overloaded, the MME may also actively send a notification to pools having overlapping areas to require the pools having overlapping areas not to perform offloading operation to the pool; or, when an MME is overloaded, the MME acquires load information of pools having overlapping areas periodically, when a pool having an overlapping area allows access of a new UE, that is, the pool is not overloaded, the MME may offload the UE in the overlapping area to the pool having the overlapping area, once a pool having an overlapping area is also overloaded, the MME stops off loading the UE to the pool, and when all pools having overlapping areas are overloaded, the MME performs an overload handling operation, that is, denies access of all UEs (except for emergency services). When an MME is overloaded, during the operation of offloading the UE to pools having overlapping area after load information of the pools having overlapping areas is acquired, once a pool having an overlapping area is overloaded, the pool needs to instruct other pools to stop offloading the UE to the pool.

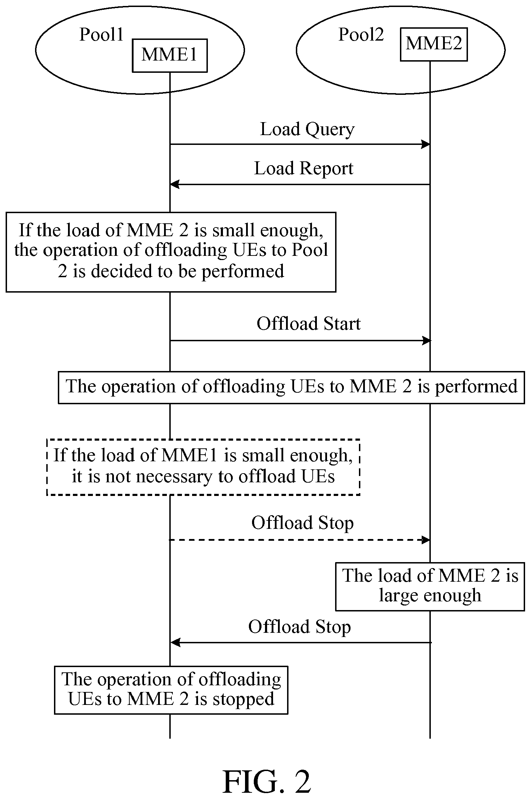

As shown in FIG. 2, for example, an MME 1 in a Pool 1 is overloaded, the MME 1 queries MME load condition of a Pool 2 having an overlapping area, if the MME load of the Pool 2 is small enough, the MME 1 may perform the operation of offloading the UE to the Pool 2, and when an MME in the Pool 2 is also overloaded, the MME 1 needs to be instructed to stop offloading the UE to the Pool 2. Furthermore, if the load of the MME 1 is small enough, an Offload Stop message also needs to be sent to the Pool 2, so that the Pool 2 knows that no other pools offloading the UE to the Pool 2, and when the Pool 2 is also overloaded, the Pool 2 can offload the UE to other pools. Before the MME 1 sends the Offload Stop message to the MME 2, the MME 2 cannot send a load query to the Pool 1 or offload the UE to the Pool 1 because the Pool 1 is still overloaded.

Furthermore, in the examples a method for transferring users to access an overloaded MME in a pool to a pool having an overlapping area with a pool of the overloaded MME is provided according to different states of UEs.

The specific operation is as follows.

When an MME is overloaded, the MME can acquire load information of an MME having an overlapping pool, which is described above and will not be described herein again, and if an MME of a pool that has an overlapping area with a pool of the overloaded MME allows access of enough users, the process is as follows.
A. For a UE being performing Tracking Area Update (TAU) or Attach, the overloaded MME can perform the following process.
   (1) The overloaded MME does not send an Overload Start message for denying UE access during overload handling to eNodeBs in an overlapping area, and transfers the UE in the overlapping area that initiate Attach/TAU. Specifically, these UEs initiate Attach/TAU to the overloaded MME through the eNodeBs in the overlapping area, the MME returns to the UE an Attach Accept message or a TAU Accept message which carries a special indication or a special MMEC or an MMEC of an MME of other pools, or the MME initiates a connection release request carrying a special cause. After receiving the request and releasing connections, the UE initiates TAU again, in which a Radio Resource Control (RRC) part of the TAU message carries a special indication, a special MMEC, or an empty field carrying MME information, the eNodeBs regards the UE as UE just entering the pool, and select MMEs of other pools for the UE. Since the loads of MMEs of this pool exceed the threshold, these overloaded MMEs are not selected for a new UE. After accessing other MMEs, the UE acquires context from the overloaded MME, and the service is not interrupted.
      Or, the overloaded MME can perform the following process.
   (2) The overloaded MME sends an Overload Start message or other messages, for example, a new message Overload Notification, to eNodeBs in an overlapping area. However, different from the ordinary Overload Start message denying UE access, these messages do not directly deny UE access; instead, these messages directly transfer the UE that requires access to a new MME, the pool of which is a non-overloaded pool, or eNodeBs initiate UE re-access, and the re-access message carries a special indication, for example, a parameter "Re-TAU Indication" or a cause value "overload". In addition to the special indication, the message may further carry a target MME indication or an empty field carrying MME information, new MMEs are selected for the UE, and the new MMEs can find the old MMEs and acquire context through a Global Unique Temporary Identity (GUTI) carried in the UE.
      Or, the overloaded MME can perform the following process.
   (3) The overloaded MME sends a message to eNodeBs in an overlapping area to instruct these eNodeBs to deny access of the UE of the MME and require them to perform new TAU. For example, the MME may send an Overload Start message or other messages, for example, a new message Overload Notification, to instruct these eNodeBs to deny access of the UE of the MME and require them to perform new TAU. The new TAU carries an indication or an empty field carrying MME information in the RRC part, the eNodeBs regard the UE as newly entering UE, select MMEs of a pool that has an overlapping area with the pool of the overloaded MME.
B. For the UE in an overlapping area that are in an Active state, the UE can be transferred to other pools by a Re-TAU or Handover (HO) method.
   The method is specifically as follows.
   In the Re-TAU method, a special message or indication is sent to the UE to require the UE to release connections and immediately initiate TAU. For example, a Re-TAU indication message is sent to the UE, or a parameter "Re-TAU" is carried in an existing message. The RRC part of the TAU message sent by the UE carries a special indication, an MMEC of a non-overloaded pool, or an empty field carrying MME information. The eNodeBs regard the UE as the UE newly entering a pool, and select MMEs of another pool having idle resources for the UE. For example, load balancing can be utilized to select suitable MMEs for the UE in an overlapping area.
   The method for transferring the UE to a pool having idle resources and having an overlapping area with the pool of the overloaded MME by handover is as follows: The original radio connections of the UE are not released, an MME Relocation operation is directly performed, and Target MMEs are selected for the UE by MMEs or eNodeBs.
C. For the UE in an overlapping area that are in an Active state and the UE initiating Attach/TAU, according to the distance from the UE to a pool having an overlapping area with the pool of the overloaded MME, the UE in a base station that is closest to the pool are UEpreferentially transferred. For example, as shown in FIG. 1, the UE under an eNodeB 4 is transferred first, so that the UE has a small chance of entering an overloaded pool again. Moreover, after transferring these users, the pool may not be overloaded, and thus it is unnecessary to transfer other users. If the pool is still overloaded, the UE under an eNodeB 3 and even an eNodeB 2 can further be transferred.
D. For the in an overlapping area that is in an Idle state, the UE can be paged first to turn to an Active state, and then processing is performed based on the Active state. For these UEs, first, the UE that is definitely in the overlapping area, for example, the UE with all TAs in a TA list being in the overlapping area, is paged, and then, the UE that is probably in the overlapping area, for example, the UE with a part of TAs in the TA list being in the overlapping area, is paged. Paging is performed only in the overlapping area.
E. Furthermore, for a newly entering UE that is in an overlapping area, that is, eNodeBs cannot find corresponding old nodes for the UE, the final load is calculated by weighting according to a load balancing principle. However, if MMEs of a pool are overloaded, the overloaded MMEs still cannot be selected after the final result is obtained by weighting; or when MMEs are overloaded, the MMEs send an overload handling message or other messages to eNodeBs in an overlapping area to indicate that the MMEs are overloaded, and to require these eNodeBs to select other pools rather than this pool for the newly entering UE. The specific method may be as follows.

Three overload thresholds, threshold 1, threshold 2 and threshold 3, are set for MMEs; and the corresponding load values of MMEs increase gradually.

When an MME reaches the threshold 1, the MME sends an Overload Start message or other messages to eNodeBs in an overlapping area to indicate that the MME is overloaded, and requests these eNodeBs to select other pools rather than this pool for the newly entering UE, so as to be prepared for load balancing allocation at the initial access. Or, the MME does not send a message, and eNodeBs select MMEs according to load information of MMEs and a weighted algorithm. However, the probability of selecting this MME is extremely low.

When an MME reaches the threshold 2, the MME starts to transfer the UE in an overlapping area that are in an Idle state and an Active state, so as to reduce the load of the MME. The MME may start from an eNodeB close to a pool that has an overlapping area with the pool of the overloaded MME, until the load of the MME is reduced to a certain degree or the UE under all eNodeBs in an overlapping area is transferred. In order to reduce the impact on users, the UE in the Idle state may be transferred first. Moreover, in order to reduce the load of an MME as soon as possible, the UE in the Active state may also be transferred first. The specific transfer mode can be defined by operators.

When an MME reaches the threshold 3, the MME sends an Overload Start message to other eNodeBs or all eNodeBs to request these eNodeBs to deny new access to this MME, because at this moment the load of the MME is very high, and access of a new UE may lead to breakdown of the MME. The UE access may be denied, and the experience of users gets worse. Or, after the MME transfers all UEs in an overlapping area, or when a pool having an overlapping area is also overloaded, the overloaded MME sends an Overload Start message to eNodeBs to trigger them to deny UE access to the MME (except for emergency services).

When the aspects described above are employed, in case of initial access of the UE, eNodeBs can select MMEs by load balancing, and different eNodeBs may preferentially select different MMEs. Still taking FIG. 1 as an example, when the UE accesses an eNodeB 2, since the eNodeB 2 is close to an MME Pool 1, if the load of MMEs in the MME Pool 1 and the load of MMEs in an MME Pool 2 are the same, the eNodeB 2 preferentially selects the MMEs in the MME Pool 1, so as to reduce the probability of MME Relocation, that is, changing MMEs. Taking FIG. 1 as an example, if the eNodeB 2 selects MMEs in the MME Pool 1, for example, an MME 1, MME Relocation occurs only after the UE moves to an eNodeB 5, and MME Relocation does not occur when the UE is in the eNodeB 2 to the eNodeB 4. If the eNodeB 2 selects MMEs in the MME Pool 2, MME Relocation occurs after the UE is transferred from the eNodeB 2 to an eNodeB 1, because the eNodeB 1 is not connected to the MMEs in the MME Pool 2, so that MMEs needs to be changed.

Therefore, load balancing may be different for eNodeBs in an overlapping area. Weighting factors of a pool are configured according to location information (MME Relocation occurrence probability) of the eNodeBs. For example, it is assumed that the maximum capacity of an MME 1 is 1 million users, the maximum capacity of an MME 2 is 1.5 million users, the maximum capacity of an MME 3 is 2 million users, and the maximum capacity of an MME 4 is 1.5 million users. If an eNodeB in a non-overlapping area, for example, the eNodeB 1, receives MME or configured weighting factors which are 10 for the MME 1 and 15 for the MME 2, a weighting factor of the eNodeB 2 in an overlapping area for the Pool 1 is 100%, and a weighting factor of the eNodeB 2 for the Pool 2 is 80%, the final weighting factors of MMEs calculated by the eNodeB 2 are: 10 * 100% = 10 for the MME 1; 15 * 100% = 15 for the MME 2; 20 * 80% = 16 for the MME 3; and 15 * 80% = 12 for the MME 4. In this way, the UE initially accessing the eNodeB 2 selects MMEs according to the final weighting factors. Moreover, because the MME Relocation probabilities are the same, the weighting factors of the eNodeB 3 for the two pools may be the same; the weighting factors of the eNodeB 4 for the two pools are: 70% for the Pool 1 and 100% for the Pool 2, and then MMEs are selected according to calculated final weighting factors. Even different eNodeBs in the same pool can set different weighting factors for different MMEs according to locations of the eNodeBs, the distances to different MMEs in the pool, or connection conditions.

Through the load balancing methods described above, it can be ensured that the most suitable MME is selected while considering both the MME Relocation probability and loads of MMEs, so that when loads of the MMEs are the same, an eNodeB can preferentially select an MME with low MME Relocation probability, but when loads of the MMEs are too heavy, the accessing UE in an overlapping area may select an MME in another pool, although in this way the MME Relocation probability gets high.

Furthermore, in the examples solutions are also provided in the case that an MME is overloaded but other MMEs in the pool are not overloaded. For example, the load balancing method cannot completely realize selection of MMEs according to loads; or an MME is immediately overloaded due to the failure of an equipment board of the MME leads, while other MMEs are still normal, which results in the circumstance that eNodeBs deny access of users to the MME, and thus the user's satisfaction degree decreases. In this circumstance, the present invention further provides another solution in the examples. When an MME is overloaded, the MME sends an Overload Start message of overload handling to all eNodeBs connected to the MME, and the eNodeBs parse the MME sending the Overload Start message. If the eNodeBs do not receive Overload Start messages of all MMEs, or the number of MMEs that send the Overload Start messages received by the eNodeBs is smaller than a certain threshold, or the proportion of MMEs that send the Overload Start messages received by the eNodeBs is smaller than a certain value, the eNodeBs determine that the MMEs that do not send Overload Start messages or the MMEs that previously send overload start messages but later send Overload Stop messages to eNodeBs are not overloaded. For example, a ratio threshold can also be set. The threshold is based on a ratio of the number of MMEs that send Overload Start messages to eNodeBs to the number of all MMEs that are connected to the eNodeBs. The range of the threshold is [0, 1]. When eNodeBs receive access of users that newly access the pool, the MMEs that do not send Overload Start messages are selected, in which a load balancing principle may be considered. When eNodeBs receive an access request of the UE that requires access to the overloaded MMEs, the eNodeBs send a deny message that requires the UE to re-initiate access, for example, a TAU request, which requires the RRC part to carry a special indication or a code of a non-overloaded MME, so that eNodeBs regard the accesses as accesses of users that newly access the pool, and select MMEs that do not send Overload Start messages for access, in which the load balancing principle may be considered. Or, eNodeBs directly transfer the access of the UE to the MMEs that do not send Overload Start messages. After the UE accesses these MMEs, the UE context can be acquired from overloaded MMEs, so as to guarantee service continuity; or, the UE context is not acquired, and the service restarts when the loads of the overloaded MMEs are too high to process signaling.

If eNodeBs receive Overload Start messages sent from all MMEs, or the proportion or number of MMEs that send Overload Start messages received by the eNodeBs is larger than a certain proportion or threshold, the eNodeBs determine that all MMEs of the pool are overloaded. Only in this case, the eNodeBs deny the access of the UE (except for the UE initiating emergency services). When eNodeBs are in a non-overlapping area, the eNodeBs deny UE access upon receiving messages sent from all MMEs in a pool. When eNodeBs are in an overlapping area, the eNodeBs deny UE access upon receiving messages sent from all connected MMEs in a pool. Otherwise, the eNodeBs may deny the UE and require them to initiate re-access and access to MMEs in other pools that do not send Overload Start messages.

When no MME allowing UE access exists or MMEs allowing UE access do not meet the threshold requirement, for example, the number of MMEs is smaller than a certain threshold, the base station denies access requests of the UE. The denied access requests of the UE may include one or more of the following requests.

Service requests for non-emergency services; service requests of the type of paging response; and RRC connection messages including non-access layer messages, for example, requests for updating a tracking area location or attach requests.

Furthermore, after the access of an eNodeB to an MME is denied for certain times, the eNodeB may also determine that the MME is overloaded, and the MME sends Overload Start messages during a certain period of time. Or, if a lower layer protocol notifies the eNodeB that the MME link fails, for example, the MME link failure is indicated by heartbeat indications between the MME and the eNodeB, the eNodeB also determines that the MME is overloaded and the MME sends an Overload Start message to it (at a certain time). Therefore, processing can also be performed according to the method above in the circumstance that an MME is overloaded, and other MMEs in the same pool are not overloaded as described above.

Persons skilled in the art should understand that the solution to the case that an MME is overloaded can be used in combination with the case that all or a part of MMEs in a pool are overloaded. For example, the UE accessing an overloaded MME can be transferred first to other MMEs in the same pool that are not overloaded. If at the moment the overloaded MME turns non-overloaded, no other processing is performed. Otherwise, the UE accessing an overloaded MME can be transferred to a pool that has an overlapping area with the pool of the overloaded MME.

Furthermore, if multiple Radio Access Technologies (RATs) exist in an area, when an RAT is overloaded, a part of or all multi-mode UEs can be transferred to other RATs. When an MME is overloaded, and other RATs, for example, the Worldwide Interoperability for Microwave Access (WiMAX), the Wireless Local Area Network (WLAN), or the Universal Mobile Telecommunications System (UMTS), exist in the area covered by the MME, if the MME can determine that the UE also supports the WiMAX and the UE is in the area covered by both the Long Term Evolution (LTE) and the WiMAX, the MME can require the UE to be transferred to the WiMAX. Specifically, when the UE is in an Active state, the MME initiates a handover request to require handover of the UE to the WiMAX, or the MME sends signaling to the Us, and requires the UE to re-register with the WiMAX or to perform TAU. When the UE is in an Idle state, the MME pages the UE, and after the UE turns Active, the UE is processed according to the case in which the UE is Active. Or, the MME sends an indication to eNodeBs in an overlapping area, and after the UE accesses these eNodeBs, the eNodeBs directly send an indication to the UE, and require the UE to re-select RATs other than this RAT for access.

According to the technical solutions described in the embodiments of the method, the present invention also provides corresponding apparatus and system.

In an embodiment, the present invention provides an MME. The MME includes an information acquisition module and a UE transfer module. The information acquisition module is adapted to acquire load information of a pool that has an overlapping area with a pool of the MME. When the MME itself is overloaded, the MME uses the UE transfer module to transfer the UE requiring access to the MME to a pool having an overlapping area with the pool of the MME. The method for transferring the UE by the UE transfer module is the same as the solution provided in the embodiments of the method, and will not be described herein again.

Furthermore, an example further provides a base station. The base station includes a load information receiving module and an MME selection module.

The load information receiving module is adapted to receive load information sent by an MME. For example, the load information may include an Overload Start message, an Offload message, an Offload Stop message, and so on. After receiving the load information, the load information receiving module notifies the MME selection module.

The MME selection module is adapted to select a suitable MME for the UE according to the notification message sent by the load information receiving module. The specific processing method is the same as the solution provided in the examples of the method, and will not be described herein again.

Accordingly, an example also provides a network system formed by the MME and the base station. In the network system, the information exchange between the base station and the MME is the same as that between MMEs and eNodeBs in an SAE system in the examples of the method, and will not be described herein again.

At the same time, persons skilled in the art should understand that other CN nodes and access network node apparatus that have the same functions as those of an MME or a base station also use the solutions described in the aspects of the present invention.

By using the solutions in the embodiments of the present invention, the load on overloaded equipment can be reduced rapidly, network resources can be balanced in time, the probability that users are denied by or unable to access the network is decreased, and the satisfaction degree of user experience is improved.

Persons of ordinary skill in the art should understand that all or a part of the steps of the method according to the embodiments of the present invention may be implemented by a computer program instructing relevant hardware. The program may be stored in a computer readable storage medium. When the program is run, the steps of the method according to the embodiments of the present invention are performed. The storage medium may be a magnetic disk, a Compact Disk Read-Only Memory (CD-ROM), a Read-Only Memory (ROM) or a Random Access Memory (RAM).

The objectives, technical solutions, and beneficial effects of the present invention have been described in further detail through the above specific embodiments. It should be understood that the above descriptions are merely specific embodiments of the present invention, but not intended to limit the present invention, which is defined by the appended claims.

## Claims

1. An overload handling method for overload handling on a System Architectural Evolution, SAE, system, **characterized by** comprising:
acquiring, by a mobility management entity, MME, in a first pool, load information of a MME in a second pool when said MME in the first pool is overloaded, wherein the second pool has an overlapping area with the first pool, wherein the overlapping area is an area belonging to or connected to multiple pools;
confirming, by the MME in the first pool, that the second pool is not overloaded according to the load information, and
transferring, by the MME in the first pool, a user equipment, UE, in the overlapping area of the first pool to the MME in the second pool.

2. The method according to claim 1, wherein before acquiring, by a MME, in a first pool, load information of a MME in a second pool, the method further comprises:
sending, by the MME in the first pool, a Load Query message to the second pool.

3. The method according to claim 1, wherein for the UE, being performing Tracking Area Update, TAU, or Attach, the transferring, by the MME in the first pool, a UE in the overlapping area of the first pool to the MME in the second pool comprises:
returning, by the MME in the first pool, an Attach Accept message or a TAU Accept message that carries a special indication or identification information of the MME in the second pool, and instructing the UE to re-access a network;
or
sending, by the MME in the first pool, a new message Overload Notification, to eNodeBs in an overlapping area, the new message Overload Notification directly transfer UEs that require access to the MME in the second pool;
or
sending, by the MME in the first pool, a message to eNodeBs in the overlapping area, to instruct the eNodeBs to deny access of the UE of the MME in first pool and require them to perform new TAU.

4. The method according to claim 3, wherein when the UE re-accesses the network, the UE carries in a Radio Resource Control, RRC, part of the TAU message a special indication, an MME Code, MMEC, allocated by the network, or an empty field carrying MME information, and the base station selects for the UE a pool having an overlapping area with a pool of the overloaded MME according to the special indication, the MMEC, or the empty field carrying MME information.

5. The method according to claim 1, wherein for a UE in the overlapping area that is in an Active state, the transferring the UE in the overlapping area of the first pool to the MME in the second pool comprises:
transferring the UE to the MME in the second pool by a Re-TAU, Handover, HO, or by MME Relocation.

6. The method according to claim 5, wherein for a UE in the overlapping area that is in an Active state, and the UE initiating Attach or TAU, the method further comprises:
transferring preferentially the UE initiating Attach or TAU of the overlapping area in a base station that is closest to the second pool.

7. The method according to claim 1, wherein for a newly entering UE that is in the overlapping area, before the transferring the UE in the overlapping area, the method further comprises:
setting overload thresholds for MME of different levels, and,
when the MME reaches a first threshold level, notifying, by the MME, a base station in the overlapping area that the MME in the first pool is overloaded, and instructing the base station to transfer the newly entering UE to the MME in the second pool; or
not sending, by the MME, messages, and selecting, by eNodeBs, MMEs according to load information of the MMEs and a weighted algorithm;
when the MME reaches a second threshold level, transferring, by the MME, all UEs under eNodeBs in the overlapping area to the pool having the overlapping area with the pool of the MME; and
when the MME reaches a third threshold level, instructing, by the MME, the base station to deny access of the UE.

8. The method according to claim 1, further comprising:
instructing, by the MME in the first pool, the second pool having the overlapping area with the first pool of the MME to stop offloading the UE to the first pool of the MME.

9. The method according to claim 1, further comprising:
acquiring, by the MME in the first pool, load information of the second pool having the overlapping area with the first pool of the MME periodically.

10. The method according to claim 1, further comprising:
when the second pool is overloaded, instructing, by the second pool, the first pool having the overlapping area with the second pool, to stop offloading the UE to the second pool.

11. A Mobility Management Entity, MME, for overload handling on a System Architectural Evolution, SAE, system, wherein the MME is in a first pool, **characterized by** comprising:
an information acquisition module, configured to acquire load information of a MME in a second pool when said MME in the first pool is overloaded, wherein the second pool has an overlapping area with the first pool, wherein the overlapping area is an area belonging to or connected to multiple pools; and
a user equipment, UE, transfer module, adapted to confirm that the second pool is not overloaded according to the load information and transfer the UE requiring access to the MME to the pool having the overlapping area with the pool of the MME according to the load information acquired by the information acquisition module.

## Patentansprüche

1. Überlasthandhabungsverfahren zur Überlasthandhabung in einem System Architectural Evolution-System, SAE-System, **dadurch gekennzeichnet, dass** es umfasst:
durch eine Mobilitätsmanagementeinheit, MME, in einem ersten Pool erfolgendes Erfassen von Lastinformationen einer MME in einem zweiten Pool, wenn die MME im ersten Pool überlastet ist, wobei der zweite Pool einen Überlappungsbereich mit dem ersten Pool aufweist, wobei der Überlappungsbereich ein Bereich ist, der zu mehreren Pools gehört oder mit diesen verbunden ist;
Bestätigen durch die MME im ersten Pool, dass der zweite Pool gemäß den Lastinformationen nicht überlastet ist, und
durch die MME im ersten Pool erfolgendes Übertragen eines Teilnehmerendgeräts, UE, im Überlappungsbereich des ersten Pools zur MME im zweiten Pool.

2. Verfahren nach Anspruch 1, wobei das Verfahren vor dem Erfassen durch ein MME in einem ersten Pool von Lastinformationen einer MME in einem zweiten Pool ferner Folgendes umfasst:
durch die MME im ersten Pool erfolgendes Senden einer Lastabfragenachricht an den zweiten Pool.

3. Verfahren nach Anspruch 1, wobei für das UE, das eine Tracking Area Update-Prozedur, TAU, oder eine Attach-Prozedur durchführt, das durch die MME im ersten Pool erfolgende Übertragen eines UE im Überlappungsbereich des ersten Pools zur MME im zweiten Pool umfasst:
durch die MME im ersten Pool erfolgendes Rücksenden einer Attach Accept-Nachricht oder einer TAU Accept-Nachricht, die einen speziellen Hinweis oder eine Identifikationsinformation der MME im zweiten Pool trägt, und Anweisen des UE, sich wieder mit einem Netz zu verbinden;
oder
durch die MME im ersten Pool erfolgendes Senden einer neuen Überlastbenachrichtigung-Nachricht an eNodeBs in einem Überlappungsbereich, wobei die neue Überlastbenachrichtigungs-Nachricht UEs, die einen Zugang benötigen, direkt zur MME im zweiten Pool überträgt;
oder
durch die MME im ersten Pool erfolgendes Senden einer Nachricht an eNodeBs im Überlappungsbereich, die eNodeBs anzuweisen, dem UE der MME im ersten Pool den Zugang zu verweigern und sie zu veranlassen, eine neue TAU-Prozedur durchzuführen.

4. Verfahren nach Anspruch 3, wobei wenn sich das UE neuerlich mit dem Netz verbindet, die UE in einem Radio Resource Control-Teil, RRC-Teil, der TAU-Nachricht einen durch das Netz zugewiesenen speziellen Hinweis, einen MME-Code, MMEC, oder ein die MME-Information tragendes leeres Feld trägt, und
die Basisstation gemäß dem speziellen Hinweis, dem MMEC oder dem die MME-Information tragenden Feld für das UE einen Pool auswählt, der einen Überlappungsbereich mit einem Pool der überlasteten MME aufweist.

5. Verfahren nach Anspruch 1, wobei für eine UE im Überlappungsbereich, das sich in einem aktiven Zustand befindet, das Übertragen des UE im Überlappungsbereich des ersten Pools zum MME im zweiten Pool umfasst:
Übertragen des UE zur MME im zweiten Pool durch eine neuerliche TAU-Prozedur, eine Verbindungsübergabeprozedur, HO-Prozedur, oder durch MME-Verlagerung.

6. Verfahren nach Anspruch 5, wobei für ein UE im Überlappungsbereich, das sich in einem aktiven Zustand befindet, und für das UE, das eine Attach- oder TAU-Prozedur initiiert, das Verfahren ferner folgendes umfasst:
vorzugsweises Übertragen des eine Attach- oder TAU-Prozedur initiierenden UE des Überlappungsbereichs in eine Basisstation, die sich am nächsten zum zweiten Pool befindet.

7. Verfahren nach Anspruch 1, wobei für ein neu hinzukommendes UE, das sich im Überlappungsbereich befindet, das Verfahren ferner folgendes umfasst:
Festsetzen von Überlastschwellenwerten für MME mit unterschiedlichen Niveaus, und
wenn die MME einen ersten Schwellenwert erreicht, durch die MME erfolgendes Benachrichtigen einer Basisstation im Überlappungsbereich, dass die MME im ersten Pool überlastet ist, und Anweisen der Basisstation, das neu hinzukommende UE zur MME im zweiten Pool zu übertragen;
oder
Nichtsenden von Nachrichten durch die MME und durch die eNodeBs erfolgendes Auswählen von MMEs gemäß Lastinformationen der MMEs und einem gewichteten Algorithmus;
wenn die MME einen zweiten Schwellenwert erreicht, durch die MME erfolgendes Übertragen aller UEs unter eNodeBs im Überlappungsbereich zu dem Pool, der einen Überlappungsbereich mit dem Pool der MME aufweist; und
wenn die MME einen dritten Schwellenwert erreicht, durch die MME erfolgendes Anweisen der Basisstation, dem UE den Zugang zu verweigern.

8. Verfahren nach Anspruch 1, ferner umfassend:
durch die MME im ersten Pool erfolgendes Anweisen des zweiten Pools, der einen Überlappungsbereich mit dem ersten Pool der MME aufweist, das Abschieben des UE zum ersten Pool der MME zu beenden.

9. Verfahren nach Anspruch 1, ferner umfassend:
durch die MME im ersten Pool erfolgendes periodisches Erfassen von Lastinformationen des zweiten Pools, der einen Überlappungsbereich mit dem ersten Pool der MME aufweist.

10. Verfahren nach Anspruch 1, ferner umfassend:
wenn der zweite Pool überlastet ist, durch den zweiten Pool erfolgendes Anweisen des ersten Pools, der einen Überlappungsbereich mit dem zweiten Pool aufweist, das Abschieben des UE zum zweiten Pool zu beenden.

11. Mobiliätsmanagementeinheit, MME, zur Überlasthandhabung in einem System Architectural Evolution-System, SAE-System, wobei sich die MME in einem ersten Pool befindet, **dadurch gekennzeichnet, dass** sie umfasst:
ein Informationserfassungsmodul, das dafür ausgelegt ist, Lastinformationen einer MME in einem zweiten Pool zu erfassen, wenn die MME im ersten Pool überlastet ist, wobei der zweite Pool einen Überlappungsbereich mit dem ersten Pool aufweist, wobei der Überlappungsbereich ein Bereich ist, der zu mehreren Pools gehört oder mit diesen verbunden ist;
und ein Modul zur Übertragung von Teilnehmerendgeräten, UE, das dafür geeignet ist, zu bestätigen, dass der zweite Pool gemäß den Lastinformationen nicht überlastet ist, und das UE, das einen Zugang zu der MME benötigt, gemäß den vom Informationserfassungsmodul erfassten Lastinformationen zu dem Pool zu übertragen, der einen Überlappungsbereich mit dem Pool der MME aufweist.

## Revendications

1. Procédé de traitement de surcharge permettant le traitement d'une surcharge sur un système du type "System Architectural Evolution", SAE, le procédé étant **caractérisé en ce qu'**il comprend :
l'acquisition, par une entité de gestion de la mobilité, MME, dans un premier pool, d'informations de charge relatives à une MME dans un deuxième pool lorsque ladite MME dans le premier pool est surchargée, le deuxième pool comportant une zone de chevauchement avec le premier pool, la zone de chevauchement étant une zone qui appartient ou qui est connectée à de multiples pools ;
la confirmation, par la MME dans le premier pool, que le deuxième pool n'est pas surchargé sur la base des informations de charge, et
le transfert, par la MME dans le premier pool, d'un équipement d'utilisateur, UE, dans la zone de chevauchement du premier pool vers la MME dans le deuxième pool.

2. Procédé selon la revendication 1, comprenant en outre, préalablement à l'acquisition, par une MME, dans un premier pool, d'informations de charge relatives à une MME dans un deuxième pool :
l'envoi, par la MME dans le premier pool, d'un message "Load Query" au deuxième pool.

3. Procédé selon la revendication 1, dans lequel, pour l'UE, qui met en oeuvre une procédure "Tracking Area Update", TAU, ou une procédure "Attach", le transfert, par la MME dans le premier pool, d'un UE dans la zone de chevauchement du premier pool vers la MME dans le deuxième pool comprend :
le renvoi, par la MME dans le premier pool, d'un message "Attach Accept" ou d'un message "TAU Accept" qui véhicule une indication spéciale ou des informations d'identification relatives à la MME dans le deuxième pool, et l'instruction donnée à l'UE d'accéder à nouveau à un réseau ;
ou
l'envoi, par la MME dans le premier pool, d'un nouveau message "Overload Notification" à des eNodeB dans une zone de chevauchement, le nouveau message "Overload Notification" transférant directement des UE sollicitant un accès à la MME dans le deuxième pool ;
ou
l'envoi, par la MME dans le premier pool, d'un message à des eNodeB dans la zone de chevauchement, donnant pour instruction à des eNodeB de refuser l'accès par l'UE de la MME dans le premier pool et les obligeant à mettre en oeuvre une nouvelle procédure TAU.

4. Procédé selon la revendication 3, dans lequel, lorsque l'UE accède à nouveau au réseau, l'UE véhicule, dans une partie "Radio Resource Control", RRC, du message TAU, une indication spéciale, un "MME Code", MMEC, alloué par le réseau, ou un champ vide véhiculant des informations de MME, et la station de base sélectionne pour l'UE un pool comportant une zone de chevauchement avec un pool de la MME surchargée sur la base de l'indication spéciale, du MMEC ou du champ vide véhiculant des informations de MME.

5. Procédé selon la revendication 1, dans lequel, pour un UE dans la zone de chevauchement qui occupe un état Actif, le transfert de l'UE dans la zone de chevauchement du premier pool vers la MME dans le deuxième pool comprend :
le transfert de l'UE vers la MME dans le deuxième pool par une procédure "Re-TAU", par une procédure "Handover", HO, ou par une procédure "MME Relocation".

6. Procédé selon la revendication 5, comprenant en outre, pour un UE dans la zone de chevauchement qui occupe un état Actif et l'UE déclenchant une procédure "Attach" ou une procédure "TAU" :
le transfert privilégié de l'UE déclenchant une procédure "Attach" ou une procédure "TAU" de la zone de chevauchement dans une station de base la plus proche du deuxième pool.

7. Procédé selon la revendication 1, comprenant en outre, pour un UE nouvel entrant qui se trouve dans la zone de chevauchement :
l'établissement de seuils de surcharge pour une MME de niveaux différents, et
lorsque la MME atteint un premier niveau de seuil, la notification, par la MME, à une station de base dans la zone de chevauchement que la MME dans le premier pool est surchargée, et l'instruction donnée à la station de base de transférer l'UE nouvel entrant vers la MME dans le deuxième pool ;
ou
le non-envoi, par la MME, de messages, et la sélection, par des eNodeB, de MME sur la base d'informations de charge relatives aux MME et d'un algorithme pondéré ;
lorsque la MME atteint un deuxième niveau de seuil, le transfert, par la MME, de tous les UE régis par des eNodeB dans la zone de chevauchement vers le pool comportant la zone de chevauchement avec le pool de la MME ; et
lorsque la MME atteint un troisième niveau de seuil, l'instruction donnée, par la MME, à la station de base de refuser l'accès par l'UE.

8. Procédé selon la revendication 1, comprenant en outre :
l'instruction donnée, par la MME dans le premier pool, le deuxième pool comportant la zone de chevauchement avec le premier pool de la MME, d'interrompre le délestage de l'UE vers le premier pool de la MME.

9. Procédé selon la revendication 1, comprenant en outre :
l'acquisition périodique, par la MME dans le premier pool, d'informations de charge relatives au deuxième pool comportant la zone de chevauchement avec le premier pool de la MME.

10. Procédé selon la revendication 1, comprenant en outre :
lorsque le deuxième pool est surchargé, l'instruction donnée, par le deuxième pool, le premier pool comportant la zone de chevauchement avec le deuxième pool,
d'interrompre le délestage de l'UE vers le deuxième pool.

11. Entité de gestion de la mobilité, MME, permettant le traitement d'une surcharge sur un système du type "System Architectural Evolution", SAE, laquelle MME se trouve dans un premier pool, la MME étant **caractérisée en ce qu'**elle comprend :
un module d'acquisition d'informations, configuré pour acquérir des informations de charge relatives à une MME dans un deuxième pool lorsque ladite MME dans le premier pool est surchargée, le deuxième pool comportant une zone de chevauchement avec le premier pool, la zone de chevauchement étant une zone qui appartient ou qui est connectée à de multiples pools ; et
un module de transfert d'équipement d'utilisateur, UE, adapté à confirmer que le deuxième pool n'est pas surchargé sur la base des informations de charge, et transférer l'UE sollicitant un accès à la MME vers le pool comportant la zone de chevauchement avec le pool de la MME sur la base des informations de charge acquises par le module d'acquisition d'informations.
